# EUROPÄISCHE PATENTSCHRIFT

(11) **EP 3 987 915 B1**
(45) Veröffentlichungstag und Bekanntmachung des Hinweises auf die Patenterteilung: **07.08.2024**
(21) Anmeldenummer: 21204244.4
(22) Anmeldetag: 22.10.2021
(51) Int. Cl.: A01D 90/04, A01F 15/10

(54) **ROTORANORDNUNG FÜR EINE LANDWIRTSCHAFTLICHE ARBEITSMASCHINE, INSBESONDERE FÜR EINEN LADEWAGEN**
ROTOR ASSEMBLY FOR AN AGRICULTURAL WORKING MACHINE, IN PARTICULAR FOR A LOADING VEHICLE
AGENCEMENT DE ROTOR POUR UNE MACHINE AGRICOLE, EN PARTICULIER POUR UN CHARIOT DE CHARGEMENT

(30) Priorität: 26.10.2020 DE 102020128068
(43) Veröffentlichungstag der Anmeldung: 27.04.2022
(73) Patentinhaber: Maschinenfabrik Bernard Krone GmbH & Co. KG, 48480 Spelle (DE)
(72) Erfinder: Dresselhaus, Christian, 48480 Spelle (DE); van Bassen, Tobias, 49832 Freren (DE)

(56) Entgegenhaltungen:
- EP-A1- 2 941 947
- EP-A1- 3 053 429
- EP-A1- 3 628 144
- DE-A1- 102016 103 108

## Beschreibung

Die vorliegende Erfindung betrifft eine Schneid- und/oder Pressvorrichtung für eine landwirtschaftliche Erntemaschine, insbesondere für einen Ladewagen oder eine Ballenpresse, mit einer Rotoraufnahme, die zum Lagern eines Schneid- und/oder Pressrotors vorgesehen ist, wobei der Schneid- und/oder Pressrotor eine Vielzahl Zinken zum Fördern des Ernteguts aufweist und sich im Betrieb der Schneid- und/oder Pressvorrichtung um eine sich in eine Querrichtung erstreckende Rotorachse in eine Rotordrehrichtung dreht, und mit einer Vielzahl Messern, die gleichmäßig zueinander beabstandet entlang einer die Rotoraufnahme begrenzenden Kanalwand gegenüber dieser vorstehend angeordnet sind, so dass die Zinken im Betrieb der Schneid- und/oder Pressvorrichtung jeweils einen Zwischenraum zwischen zwei benachbarten Messern passieren, wobei die Kanalwand einen Kanaldurchlass aufweist, der den Messern in einer Gutflussrichtung nachgeordnet ist, wobei an in Querrichtung gegenüberliegenden Enden des Kanaldurchlasses jeweils eine Trennwand angeordnet ist. Die vorliegende Erfindung betrifft weiterhin eine landwirtschaftliche Erntemaschine mi einer solchen Schneid- und/oder Pressvorrichtung.

Zum Aufnehmen von Erntegut in eine landwirtschaftliche Erntemaschine weisen diese regelmäßig eine Aufnahmeanordnung mit einer Aufnahmevorrichtung, beispielsweise in der Ausbildung einer Pick- up, zum Aufnehmen des am Boden liegenden Ernteguts, sowie mit einer Schneid- und/oder Pressvorrichtung auf, mit dem das aufgenommene Erntegut durch einen Kanaldurchlass in einen Aufnahmeraum der Erntemaschine gefördert wird. Die Schneid- und/oder Pressvorrichtung weist dafür einen Schneid- und/oder Pressrotor mit Zinken auf, die das Erntegut dem Kanaldurchlass zu fördern. Zudem weist sie Messer auf, mit denen das Erntegut dabei geschnitten wird, bevor es in den Kanaldurchlass gelangt. Jedoch kann es an den gegenüberliegenden Kanalenden des Kanaldurchlasses dazu kommen, dass sich langes, ungeschnittenes Erntegut um die jeweils äußeren Zinken legt und mitgenommen wird, ohne geschnitten zu werden. Dadurch kann ungeschnittenes Erntegut in den Aufnahmeraum der Erntemaschine gelangen.

Die Druckschrift EP 2 941 947 B1 offenbart einen Ladewagen, mit einer Ladevorrichtung, die einen Rotor aufweist, der entlang einer lichten Weite eines Presskanals Presszinken aufweist, sowie jeweils beidseitig davon angeordnete, als Schaufeln ausgebildete Querfördermittel. Um Verstopfen, Wickeln und/oder Vermusen des Ladeguts zu vermeiden, sind im seitlichen Übergangsbereich vom Presskanalausgang zum Laderaum Abdeckungen vorgesehen, die Wandflächen des Presskanals bilden. Die Abdeckungen sind über dem Rotor links und rechts über den neben den Presszinken angeordneten Schaufeln angebracht, so dass die Schaufeln zum Laderaum hin abgedeckt sind.

Die Druckschrift DE 10 2016 103 108 A1 offenbart eine Erntemaschine mit einer Pressvorrichtung, die einen Rotor aufweist, der mittig Presszinken und jeweils seitlich davon als Schnecken ausgebildete Querfördermittel umfasst. Die sich an die Schnecken anschließenden äußeren Presszinken des Rotors bilden einen Überlappungsbereich aus.

Die Druckschrift EP 3 053 429 A1 offenbart eine Erntemaschine mit einem einer Pick-up nachgeordneten Schneidtisch, der zwischen einer ersten und einer zweiten Seitenwand angeordnet ist. Die äußeren Messer sind von den Seitenwänden beabstandet.

Die Druckschrift EP 3 628 144 A1 offenbart ein Erntegut-Schneidwerk mit unterhalb einer Führungsfläche absenkbaren Messern. Oberhalb der Führungsfläche ist diese seitlich durch Wandelemente begrenzt.

Aufgabe der vorliegenden Erfindung ist es, eine Schneid- und/oder Pressvorrichtung für eine landwirtschaftliche Erntemaschine zu schaffen, bei der kein ungeschnittenes Erntegut durch den Kanalauslass gefördert wird, und sich am Kanalauslass, insbesondere an gegenüberliegenden Kanalenden des Kanalauslasses, dennoch kein Erntegut staut, so dass während des Betriebs der Schneid - und Pressvorrichtung ein ungehinderter Gutfluss gewährleistet ist.

Die Aufgabe wird gelöst mit einer Schneid- und/oder Pressvorrichtung mit den Merkmalen des unabhängigen Patentanspruchs 1 sowie einer landwirtschaftlichen Erntemaschine, insbesondere einem Ladewagen oder einer Ballenpresse, mit den Merkmalen des Patentanspruchs 9. Vorteilhafte Ausführungsformen sind den abhängigen Ansprüchen entnehmbar.

Dafür wird eine Schneid- und/oder Pressvorrichtung für eine landwirtschaftliche Erntemaschine, insbesondere einen Ladewagen oder eine Ballenpresse, geschaffen. Die Schneid- und/oder Pressvorrichtung weist eine Rotoraufnahme auf, die zum Lagern eines Schneid- und/oder Pressrotors vorgesehen ist.

Weiterhin weist die Schneid- und/oder Pressvorrichtung den Schneid- und/oder Pressrotor auf. Der Schneid- und/oder Pressrotor dreht sich im Betrieb der Schneid- und/oder Pressvorrichtung um eine sich in eine Querrichtung erstreckende Rotorachse in eine Rotordrehrichtung. Am Schneid- und/oder Pressrotor ist eine Vielzahl Zinken, insbesondere in gleichmäßig zueinander beabstandeten Reihen, angeordnet. Die Zinken sind zum Fördern des Ernteguts vorgesehen. Sie erstrecken sich von der Rotorachse ausgehend in radialer Richtung.

Zudem weist die Schneid- und/oder Pressvorrichtung eine Vielzahl Messer auf, die gleichmäßig zueinander beabstandet entlang einer die Rotoraufnahme begrenzenden Kanalwand gegenüber dieser vorstehend angeordnet sind. Dadurch passieren die Zinken im Betrieb der Schneid- und/oder Pressvorrichtung jeweils einen Zwischenraum zwischen zwei benachbarten Messern.

Die Kanalwand weist weiterhin einen Kanaldurchlass auf, der den Messern in einer Gutflussrichtung nachgeordnet ist. Dabei ist an in Querrichtung gegenüberliegenden Enden des Kanaldurchlasses jeweils eine Trennwand angeordnet, die den Kanaldurchlass begrenzt.

Die Schneid- und/oder Pressvorrichtung zeichnet sich dadurch aus, dass die beiden in Querrichtung äußeren Messer jeweils zumindest einen Teil einer Randkontur einer der Trennwände bilden.

Da alle Messer zwischen oder an den Trennwänden angeordnet sind, und die Trennwände zudem den Kanaldurchlass begrenzen, kann im Betrieb der Schneid- und/oder Pressvorrichtung nur geschnittenes Erntegut durch den Kanaldurchlass gelangen. Dabei bilden die Trennwände auch keine Staukante, da das Erntegut an ihnen geschnitten wird.

Dafür kann jede der Trennwände jeweils als Messer ausgebildet sein. Alternativ kann ein Messer in jede der Trennwände jeweils integriert sein, beispielsweise indem es fluchtend zu der Trennwand, in die es integriert ist, oder unmittelbar außenseitig zumindest geringfügig überlappend angeordnet ist, so dass es über die Trennwand hinausragt. Oder die Messer können jeweils unmittelbar an der jeweiligen äußeren Trennwand anliegen, so dass es über diese hinausragt und dadurch einen Teil seiner Randkontur bildet. Die Trennwände können dafür jeweils eine Aussparung oder Prägung aufweisen, in die das Messer eingelegt ist.

Bevorzugt weist die Schneid- und/oder Pressvorrichtung genau zwei den Kanaldurchlass an gegenüberliegenden Enden begrenzende Trennwände auf. Dabei ist es bevorzugt, dass sich die Trennwände dafür in eine Längsrichtung quer zur Querrichtung erstrecken.

Besonders bevorzugt ragen die Trennwände jeweils bis zu einer Außenumfangsfläche des Schneid- und/oder Pressrotors in diesen hinein. Ein Trennabstand der Trennwände von der Rotorachse ist dadurch etwa gleich einem oder unwesentlich größer als ein Radius einer Außenumfangsfläche des Schneid- und/oder Pressrotors von der Rotorachse. Dadurch ist ein Spalt zwischen den Trennwänden und der Außenumfangsfläche des Schneid- und/oder Pressrotors so klein, dass kein ungeschnittenes Erntegut zwischen dem Schneid- und/oder Pressrotor und einer der Trennwände hindurch in den Kanaldurchlass gelangen kann. Dafür ist es weiterhin bevorzugt, dass ein Teil der Kontur der Trennwände konzentrisch zur Rotorachse ausgebildet ist, so dass der Spalt minimiert ist.

In einer besonders bevorzugten Ausführungsform sind die Trennwände jeweils zwischen zwei in Querrichtung benachbarten Zinken angeordnet. An einer dem Kanaldurchlass abgewandten Seite der Trennwände ist daher bevorzugt jeweils zumindest ein äußerer Zinken, im Folgenden Außenzinken, angeordnet. Der Außenzinken ist dafür vorgesehen, das ungeschnittene Erntegut mitzunehmen. Weiterhin ist er dafür vorgesehen, das ungeschnittene Erntegut dem Erntegutstrom wieder zuzuführen.

Die Zinken sind bevorzugt in sich radial zur Rotorachse erstreckenden Reihen angeordnet. Sie sind vorzugsweise gleichmäßig voneinander beabstandet.

Besonders bevorzugt sind sie etwa dreieckförmig ausgebildet. An einer in Drehrichtung vorlaufenden Seite weisen sie bevorzugt eine Pressfläche auf. Dabei sind die Zinken benachbarter Reihen in Drehrichtung jeweils um denselben Drehwinkel zueinander verdreht angeordnet. Dadurch sind die Pressflächen in Querrichtung gesehen etwa schneckenförmig um den Schneid- und/oder Pressrotor herum angeordnet.

Die Schneid- und/oder Pressvorrichtung weist bevorzugt einen Schneid- und/oder Pressbereich auf, der sich von einer Trennwand zur gegenüberliegenden Trennwand erstreckt, und in dem die Messer angeordnet sind. Weiterhin bevorzugt weist die Schneid- und/oder Pressvorrichtung an der dem Kanaldurchlass abgewandten Seite der Trennwände jeweils einen Rand- und/oder Förderbereich auf, in dem der zumindest eine Außenzinken angeordnet ist. Der Außenzinken nimmt das ungeschnittene Erntegut mit und befördert es zurück in den Erntegutstrom. Im Rand- und/oder Förderbereich kann jeweils zudem zumindest ein Querfördermittel, insbesondere eine Querförderschnecke, am Schneid- und/oder Pressrotor angeordnet sein. Die Querfördermittel sind dafür vorgesehen, den in oder gegen die Querrichtung über den Schneid- und/oder Pressbereich hinausgehenden Erntegutstrom in den Schneid- und/oder Pressbereich hinein zu fördern.

Im Rand- und/oder Förderbereich ist eine Rückwand dafür geschlossen ausgebildet. Durch die den Rand- und/oder Förderbereich begrenzende Trennwand sowie die Rückwand ist der Außenzinken eingeschlossen. Dabei ist es bevorzugt, dass die Trennwand und die Rückwand jeweils grat- und/oder kantenfrei ausgebildet sind. Dadurch gelangt das vom Außenzinken mitgenommene, ungeschnittene Erntegut staufrei und unvermust zurück in den Erntegutstrom.

Die Aufgabe wird weiterhin gelöst mit einer landwirtschaftlichen Erntemaschine, insbesondere einem Ladewagen oder einer Ballenpresse, mit einer solchen Schneid- und/oder Pressvorrichtung. Durch die Ausstattung des Ladewagens oder der Ballenpresse mit der Schneid- und/oder Pressvorrichtung ist gewährleitet, dass nur geschnittenes Erntegut von dem Ladewagen oder der Ballenpresse aufgenommen wird.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine landwirtschaftliche Erntemaschine, hier einen Ladewagen;
- Fig. 2: ein Schnittbild durch eine Aufnahmeanordnung der landwirtschaftlichen Erntemaschine der Fig. 1;
- Fig. 3: eine erste Ausführungsform einer Rotoraufnahme einer Schneidund/oder Pressvorrichtung für die Aufnahmeanordnung der Fig. 2 in einer perspektivischen Ansicht von vorn;
- Fig. 4: einen Ausschnitt aus einer Schneid- und/oder Pressvorrichtung mit der Rotoraufnahme der Fig. 3 in einem Schnittbild; und
- Fig. 5: eine weitere Ausführungsform einer Schneid- und/oder Pressvorrichtung für die Aufnahmeanordnung der Fig. 2 in einer perspektivischen Ansicht von hinten.

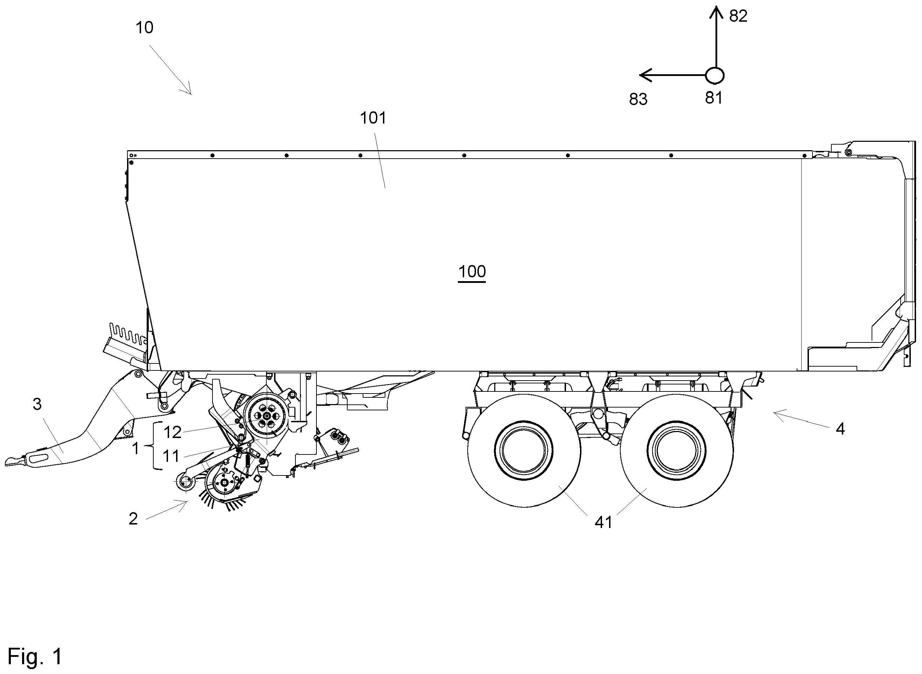

Fig. 1 zeigt schematisch eine landwirtschaftliche Erntemaschine, hier einen Ladewagen 10. Im Folgenden werden daher die Begriffe landwirtschaftliche Erntemaschine und Ladewagen 10 synonym verwendet. Die Erfindung ist aber nicht auf Ladewagen 10 begrenzt, sondern umfasst auch weitere landwirtschaftliche Erntemaschinen wie beispielsweise Ballenpressen (nicht gezeigt).

Der Ladewagen 10 weist einen Laderaum 100 auf, der durch Außenwände 101 begrenzt ist. Er ist als gezogene landwirtschaftliche Erntemaschine 10 ausgebildet und weist dafür eine Anhängerkupplung 3 auf, sowie ein Fahrwerk 4, an dem Räder 41, hier beispielhaft zwei Räderpaare, angeordnet sind. Die Erfindung ist aber nicht auf gezogene landwirtschaftliche Erntemaschinen 10 begrenzt, sondern umfasst auch selbstfahrende landwirtschaftliche Erntemaschinen (nicht gezeigt).

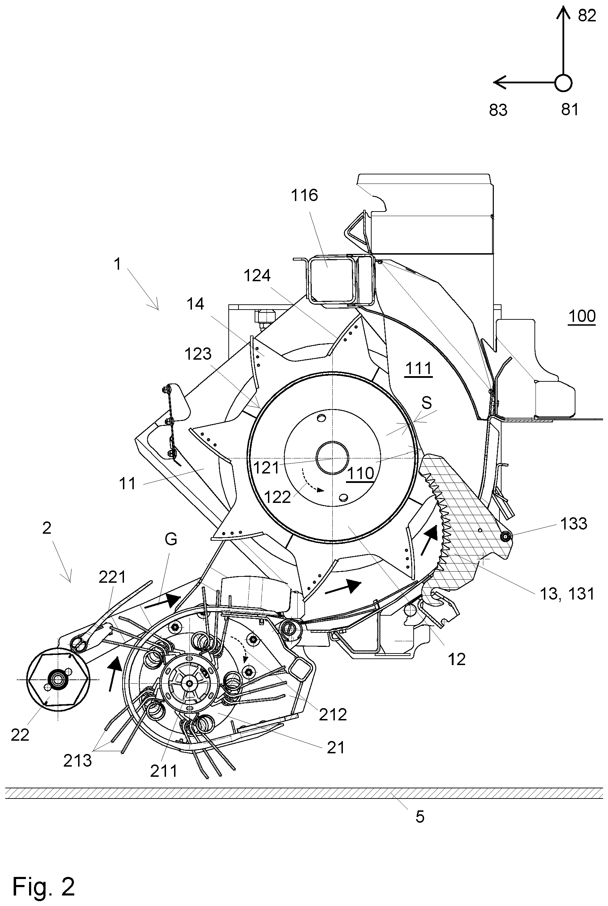

Um am Boden 5 (s. Fig. 2) liegendes Erntegut (nicht gezeigt) in den Laderaum 100 aufzunehmen, weist der Ladewagen 10 eine Aufnahmeanordnung auf, mit einer Aufnahmevorrichtung 2 sowie mit einer Schneid- und/oder Pressvorrichtung 1.

Fig. 2 zeigt ein Schnittbild durch die Aufnahmeanordnung der landwirtschaftlichen Erntemaschine 10 der Fig. 1. Die Aufnahmeanordnung weist die Aufnahmevorrichtung 2 und die Schneid- und/oder Pressvorrichtung 1 auf.

Die Aufnahmevorrichtung 2 der Aufnahmeanordnung ist als eine Pick- up ausgebildet. Sie weist einen Aufnahmerotor 21 auf, an dem eine Vielzahl Aufnahmezinken 213 angeordnet sind. Der Aufnahmerotor 21 erstreckt sich entlang einer Aufnahmeachse 211, die sich in eine Querrichtung 81, und quer zu einer Fahrt- und/oder Längsrichtung 83 des Ladewagens 10 erstreckt. Er ist im Betrieb der Aufnahmeanordnung in eine Aufnahmedrehrichtung 212 um die Aufnahmeachse 211 drehbar.

Weiterhin weist die Aufnahmevorrichtung 2 der Aufnahmeanordnung eine Niederhalterolle 22 auf, die dem Aufnahmerotor 21 in Fahrtrichtung 83 vorgeordnet ist, und die zum Aufnahmerotor 21 in eine Erstreckungsrichtung 82, die sich quer zur Fahrtrichtung 83 und quer zur Querrichtung 81 erstreckt, versetzt angeordnet ist. Der Niederhalterolle 22 ist ein Niederhalteflügel 221 in einer Gutflussrichtung G nachgeordnet. Der Niederhalteflügel 221 erstreckt sich ebenfalls in Querrichtung 81 und ist oberhalb der Niederhalterolle 22 gehaltert. Die Niederhalterolle 22 und der Niederhalteflügel 221 sind als Leitelemente für das Erntegut vorgesehen. Mit ihnen wird das vom Aufnahmerotor 21 angehobene Erntegut zur Schneid- und/oder Pressvorrichtung 1 geleitet.

Im Betrieb der Aufnahmeanordnung werden sowohl die Aufnahmevorrichtung 2 als auch die Schneid- und/oder Pressvorrichtung 1 angetrieben. Beide Vorrichtungen 1, 2 befinden sich dann ebenfalls im Betriebszustand. Der in Gutflussrichtung weisende Pfeil G zeigt den im Betrieb der Aufnahmeanordnung fließenden Erntegutstrom.

Die Schneid- und/oder Pressvorrichtung 1 weist eine Rotoraufnahme 11 auf, die zum Lagern eines Schneid- und/oder Pressrotors 12 vorgesehen ist. Weiterhin weist sie den Schneid- und/oder Pressrotor 12 sowie eine Vielzahl Messer 13 auf. Mit dem Schneid- und/oder Pressrotor 12 wird das Erntegut entlang der Messer 13 gefördert, so dass es geschnitten wird.

Der Schneid- und/oder Pressrotor 12 ist im Betrieb der Schneid- und/oder Pressvorrichtung 1 um eine sich in Querrichtung 81 erstreckende Rotorachse 121 in eine Rotordrehrichtung 122 drehbar. Er weist eine Vielzahl Zinken 14 auf, die zum Fördern des Ernteguts vorgesehen sind.

Die Zinken 14 sind etwa dreieckförmig ausgebildet und in sich radial zur Rotorachse 121 erstreckenden Reihen (nicht bezeichnet) angeordnet. An einer in Drehrichtung 122 vorlaufenden Seite (nicht bezeichnet) weisen sie eine Pressfläche 124 auf. Die Reihen sind gleichmäßig voneinander beabstandet. Dabei sind die Zinken 14 benachbarter Reihen in Drehrichtung 122 jeweils um denselben Drehwinkel (nicht dargestellt) zueinander verdreht angeordnet. Dadurch verlaufen die Pressflächen 124 in Querrichtung 81 etwa schneckenförmig um den Schneid- und/oder Pressrotor 12 herum.

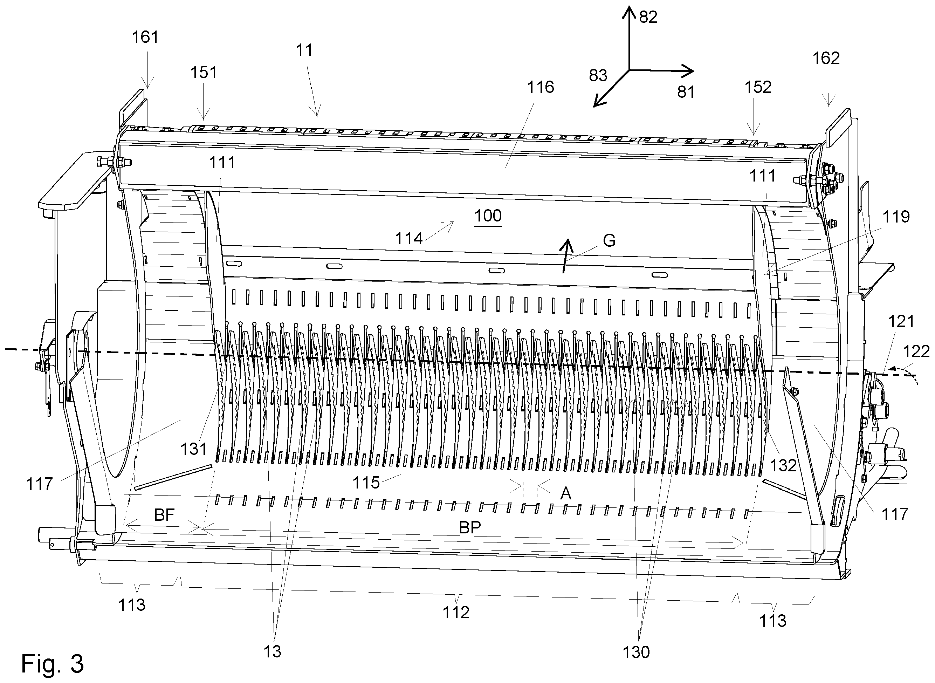

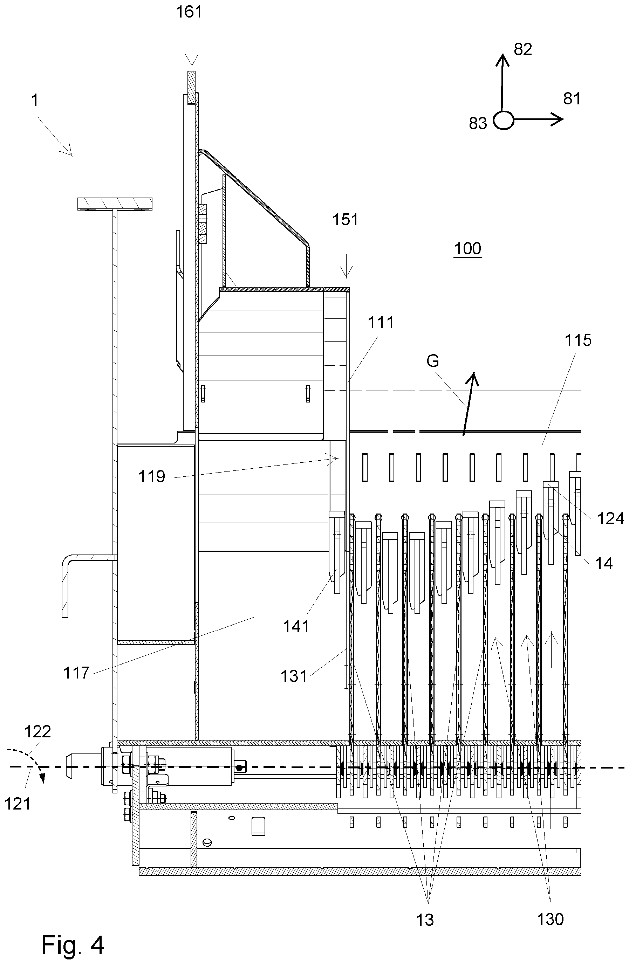

Fig. 3 zeigt eine erste Ausführungsform einer Rotoraufnahme 11 einer Schneid- und/oder Pressvorrichtung 1 für die Aufnahmeanordnung der Fig. 2 in einer perspektivischen Ansicht von vorn. Dargestellt ist auch die Anordnung der Messer 13 in der Rotoraufnahme 11. Der Schneid- und/oder Pressrotor ist in Fig. 3 der Übersichtlichkeit halber nicht gezeigt. Jedoch sind die Rotorachse 121 sowie die Drehrichtung 122 schematisch dargestellt. Fig. 4 zeigt einen Ausschnitt aus der Rotoraufnahme der Fig. 3 in einem Schnittbild. Dargestellt sind nicht nur die Messer 13, sondern auch Bauteile des Schneid- und/oder Pressrotors 12.

Die Rotoraufnahme 11 weist einen Schneid- und/der Pressbereich 112 auf, in dem eine Vielzahl Messer 13 angeordnet sind. Die Messer 13 weisen einen gleichen Abstand A zueinander auf. Sie sind in einer Reihe, die sich in Querrichtung 81 erstreckt, nebeneinander an einer die Rotoraufnahme 11 im Schneid- und/oder Pressbereich 112 begrenzenden Kanalwand 115 angeordnet. Dabei überragen sie die Kanalwand 115. Dafür weist die Kanalwand 115 für jedes Messer 13 jeweils eine Ausnehmung (nicht bezeichnet) auf, durch die das Messer 13 hindurch gesteckt ist. Um Steinen ausweichen zu können, sind die Messer 13 um eine sich in Querrichtung 81 erstreckende Messerachse 133 drehbar gelagert. Die Ausnehmungen sind dafür ausreichend lang vorgesehen.

Die Kanalwand 115 weist einen Kanaldurchlass 114 auf, der den Messern 13 in Gutflussrichtung G nachgeordnet ist. In Erstreckungsrichtung 83 oberhalb des Kanaldurchlasses 114 ist dieser durch einen Querverbinder 116, der hier beispielshaft als Vierkantrohr ausgebildet ist, begrenzt. Da die Messer 13 die Kanalwand 115 überragen, wird bei angetriebenem Schneid- und/oder Pressrotor 12 das Erntegut mit Hilfe der an den Zinken 14 angeordneten Pressflächen 124 jeweils durch einen Zwischenraum 130 zwischen benachbarten Messern 13 gedrückt und dabei mittels der Messer 13 geschnitten. Das geschnittene Erntegut passiert die Zwischenräume 130 und wird dann dem den Messern 13 nachgeordneten Kanaldurchlass 114 zugeführt.

An in Querrichtung 81 gegenüberliegenden Enden 151, 152 des Kanaldurchlasses 114 ist jeweils eine Trennwand 111 angeordnet, die den Kanaldurchlass 114 begrenzt. In der dargestellten Ausführungsform weist die Schneid- und/oder Pressvorrichtung genau zwei den Kanaldurchlass 114 an gegenüberliegenden Enden 151, 152 begrenzende Trennwände 111 auf. Die Trennwände 111 erstrecken sich quer zur Querrichtung 81.

Die beiden in Querrichtung 81 äußeren Messer 13, die hier auch mit den Bezugszeichen 131 für das in Fahrtrichtung 83 rechte, und 132 für das in Fahrtrichtung 83 linke Messer 13 bezeichnet sind, bilden jeweils zumindest einen Teil einer Randkontur 110 (s. Fig. 2) jeweils einer der Trennwände 111. Die beiden Messer 131, 132 sind dafür hier jeweils fluchtend zu der Trennwand 111, deren Randkontur 110 sie zumindest teilweise bilden, und unmittelbar an dieser anliegend angeordnet. Sie ragen über die Trennwand 111 hinaus. Dadurch bilden sie einen Teil ihrer Randkontur 110. Alternativ dazu ist aber auch eine Ausführungsform bevorzugt, bei der die Trennwände 111 selbst jeweils als Messer 131, 132 ausgebildet sind, so dass sie entlang ihrer Randkontur 110 zumindest teilweise eine Schneide aufweisen.

Da das ungeschnittene Erntegut an den Trennwänden 111, die den Kanaldurchlass 114 begrenzen, geschnitten wird, kann im Betrieb der Schneid- und/oder Pressvorrichtung 1 nur geschnittenes Erntegut durch den Kanaldurchlass 114 in den Laderaum 100 des Ladewagens 10 gelangen. Dabei bilden die Trennwände 11 auch keine Staukante, da das Erntegut an ihnen geschnitten wird.

Um zu verhindern, dass ungeschnittenes Erntegut durch einen Spalt S zwischen den Trennwänden 111 und dem Schneid- und/oder Pressrotor 12 hindurch in den Kanaldurchlass 114 gelangen kann, ragen die Trennwände 111 zudem jeweils, insbesondere in radialer Richtung (nicht bezeichnet) zur Rotorachse 121, bis zu einer Außenumfangsfläche 123 des Schneid- und/oder Pressrotors 12 in diesen hinein. Ein Trennabstand (nicht bezeichnet) der Trennwände 111 von der Rotorachse 121 ist dadurch etwa gleich einem oder unwesentlich größer als ein Radius (nicht bezeichnet) der Außenumfangsfläche 123 des Schneid- und/oder Pressrotors 12. Weiterhin ist dafür zumindest ein Teil (nicht bezeichnet) der Randkontur 110 der Trennwände 111 jeweils konzentrisch zur Rotorachse 121 ausgebildet. Der Spalt S ist in diesem Teil daher minimiert.

Die Trennwände 111 sind jeweils zwischen zwei in Querrichtung 81 benachbarten Zinken 14 angeordnet. An einer dem Kanaldurchlass 114 abgewandten Seite 119 der Trennwände 111 ist jeweils zumindest ein äußerer Zinken 14, der im Folgenden auch mit dem Bezugszeichen 141 versehen und als Außenzinken bezeichnet ist, angeordnet. Die Außenzinken 141 sind jeweils dafür vorgesehen, das ungeschnittene Erntegut mitzunehmen, um es dem Erntegutstrom G wieder zuzuführen.

Der Schneid- und/oder Pressbereich 112 erstreckt sich von einer Trennwand 111 zur gegenüberliegenden Trennwand 111. Eine Breite BP des Schneid- und/oder Pressbereichs 112 entspricht einer Breite (nicht bezeichnet) des Kanaldurchlasses 114.

Zudem weist die Schneid- und/oder Pressvorrichtung 1 an der dem Kanaldurchlass 114 abgewandten Seite 119 der Trennwände 111 jeweils einen Rand- und/oder Förderbereich 113 auf. In jedem Rand- und Förderbereich ist wenigstens ein Außenzinken 141 angeordnet.

Um im Rand- und/oder Förderbereich 113 einen gleichmäßigen Erntegutstrom G zu gewährleisten, weist die Rotoraufnahme 11 im Rand- und/oder Förderbereich 113 eine Rückwand 117 auf, die geschlossen, sowie grat- und/oder kantenfrei ausgebildet ist. Die Rückwand 117 und die Trennwand 111 schließen den Außenzinken soweit ein, dass das vom Außenzinken 141 mitgenommene, ungeschnittene Erntegut staufrei und unvermust zurück in den Erntegutstrom G gelangt.

Die beiden Rand- und/oder Förderbereiche 113 sind zum Querfördern von Erntegut zum Schneid- und/oder Pressbereich 112 hin vorgesehen. Sie erstrecken sich jeweils von ihrer Trennwand 111 bis zu einem äußeren Förderende 161, 162. Sie ermöglichen, dass die Aufnahmevorrichtung 2 um ihre Breite BF breiter als der Kanaldurchlass 114 ausgebildet ist.

In Fig. 4 ist unmittelbar ersichtlich, dass die Rand- und/oder Förderbereich 113 der Rotoraufnahme 11 jeweils erheblich breiter sind als der zumindest eine dort jeweils angeordnete Außenzinken 14, 141. Die Förder- und/oder Pressvorrichtung 1 der Fig. 3 und 4 sieht daher im Rand- und/oder Förderbereich 113 neben dem wenigstens einen Außenzinken 141 zudem jeweils Querfördermittel vor. Als Querfördermittel kommen beispielsweise Querförderschnecken (nicht gezeigt) in Frage.

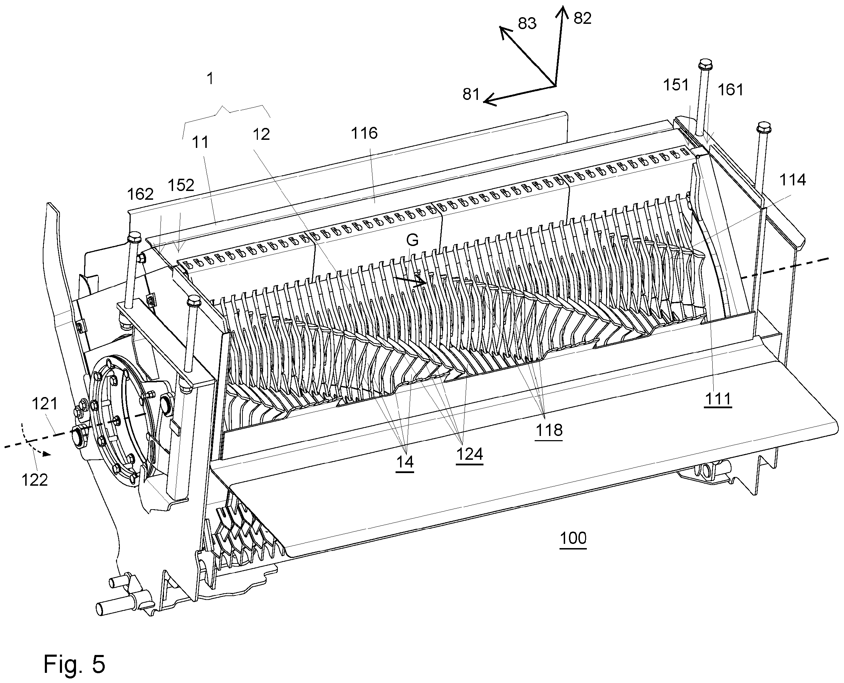

Fig. 5 zeigt eine weitere Ausführungsform einer Schneid- und/oder Pressvorrichtung 1 für die Aufnahmeanordnung der Fig. 2 in einer perspektivischen Ansicht von hinten.

In der Rotoraufnahme 11 ist der Schneid- und/oder Pressrotor 12 gelagert. Sichtbar ist der schneckenförmige Verlauf der Pressflächen 124 entlang des Schneid- und/oder Pressrotors 12 und um ihn herum.

Um zu vermeiden, dass geschnittenes Erntegut im Schneid- und/oder Pressbereich 112 vom Schneid- und/oder Pressrotor 12 mitgenommen wird, sind im Kanaldurchlass 114 etwa fluchtend zu den Messern 13 jeweils Abstreifer 118 angeordnet. Bei angetriebenem Schneid- und/oder Pressrotor 12 passieren die Zinken 14 die Abstreifer 118 und streifen das an ihnen anhaftende Erntegut auf der dem Laderaum 100 des Ladewagens 10 zugewandten Seite (nicht bezeichnet) der Abstreifer 118 an diesen ab.

Sichtbar ist, dass die Kanalenden 151, 152 und die Förderenden 161, 162 hier nur geringfügig voneinander beabstandet sind. Bei dieser Schneid- und/oder Pressvorrichtung sind daher im Rand- und/oder Förderbereich 113 nur jeweils der eine Außenzinken und keine weiteren Querfördermittel vorgesehen.

Aufgrund der den Kanaldurchlass 114 jeweils an seinen Kanalenden 151, 152 begrenzenden Trennwände 111 gelangt auch bei dieser Ausführungsform der Schneid- und/oder Pressvorrichtung 1 kein ungeschnittenes Erntegut in den Laderaum 100 des Ladewagens 10.

## Patentansprüche

1. Schneid- und/oder Pressvorrichtung (1) für eine landwirtschaftliche Erntemaschine, insbesondere für einen Ladewagen (10) oder eine Ballenpresse, mit einem Schneid- und/oder Pressrotor (12) und mit einer Rotoraufnahme (11), die zum Lagern des Schneid- und/oder Pressrotors (12) vorgesehen ist, wobei der Schneid- und/oder Pressrotor (12) eine Vielzahl Zinken (14) zum Fördern des Ernteguts aufweist und sich im Betrieb der Schneid- und/oder Pressvorrichtung (1) um eine sich in eine Querrichtung (81) erstreckende Rotorachse (121) in eine Rotordrehrichtung (122) dreht, und mit einer Vielzahl Messern (13), die gleichmäßig zueinander beabstandet entlang einer die Rotoraufnahme (11) begrenzenden Kanalwand (115) gegenüber dieser vorstehend angeordnet sind, so dass die Zinken (14) im Betrieb der Schneid- und/oder Pressvorrichtung (1) jeweils einen Zwischenraum (130) zwischen zwei benachbarten Messern (13) passieren, wobei die Kanalwand (115) einen Kanaldurchlass (114) aufweist, der den Messern (13) in einer Gutflussrichtung (G) nachgeordnet ist, wobei an in Querrichtung (81) gegenüberliegenden Enden (151, 152) des Kanaldurchlasses (114) jeweils eine Trennwand (111) angeordnet ist, die den Kanaldurchlass (114) begrenzt,
**dadurch gekennzeichnet, dass**
die in Querrichtung (81) äußeren Messer (131, 132) jeweils zumindest einen Teil einer Randkontur (110) einer der Trennwände (111) bilden.

2. Schneid- und/oder Pressvorrichtung (1) nach Anspruch 1, **dadurch gekennzeichnet, dass** die Trennwände (111)jeweils als äußeres Messer (131, 132) ausgebildet sind, oder dass die äußeren Messer (131, 132) jeweils an einer der Trennwände (111) anliegen, oder dass die äußeren Messer (131, 132) in eine der Trennwände (111) integriert sind.

3. Schneid- und/oder Pressvorrichtung (1) nach einem der vorherigen Ansprüche, **dadurch gekennzeichnet, dass** die Trennwände (111) jeweils bis zu einer Außenumfangsfläche (123) des Schneid- und/oder Pressrotors (12) in diesen hineinragen.

4. Schneid- und/oder Pressvorrichtung (1) nach einem der vorherigen Ansprüche, **dadurch gekennzeichnet, dass** ein Teil der Kontur (110) der Trennwände (111) jeweils konzentrisch zur Rotorachse (121) ausgebildet ist.

5. Schneid- und/oder Pressvorrichtung (1z) nach einem der vorherigen Ansprüche, **dadurch gekennzeichnet, dass** die Trennwände (111) jeweils zwischen zwei in Querrichtung (81) benachbarten Zinken (141, 14) angeordnet sind.

6. Schneid- und/oder Pressvorrichtung (1) nach einem der vorherigen Ansprüche, **dadurch gekennzeichnet, dass** an einer dem Kanaldurchlass (114) abgewandten Seite (119) der Trennwände (111) jeweils zumindest ein äußerer Zinken (141) angeordnet ist, der zum Mitnehmen von ungeschnittenem Erntegut vorgesehen ist.

7. Schneid- und/oder Pressvorrichtung (1) nach einem der vorherigen Ansprüche, **dadurch gekennzeichnet, dass** sie einen Schneid- und/oder Pressbereich (112) aufweist, der sich von einer Trennwand (111) zur gegenüberliegenden Trennwand (111) erstreckt, und in dem die Messer (13) angeordnet sind, und dass sie an der dem Kanaldurchlass (114) abgewandten Seite der Trennwände (111) jeweils einen Rand- und/oder Förderbereich (113) aufweist, in dem jeweils der zumindest eine Außenzinken (141) angeordnet ist.

8. Schneid- und/oder Pressvorrichtung (1) nach einem der vorherigen Ansprüche, **dadurch gekennzeichnet, dass** am Schneid- und/oder Pressrotor jeweils im Rand- und/oder Förderbereich ein Querfördermittel angeordnet ist.

9. Landwirtschaftliche Erntemaschine mit einer Schneid- und/oder Pressvorrichtung (1) nach einem der vorherigen Ansprüche.

## Claims

1. Cutting and/or pressing device (1) for an agricultural harvesting machine, in particular for a loading vehicle (10) or a baling press, having a cutting and/or pressing rotor (12) and having a rotor holder (11) which is provided for supporting the cutting and/or pressing rotor (12), the cutting and/or pressing rotor (12) comprising a number of tines (14) for conveying the harvested crop and, during operation of the cutting and/or pressing device (1), rotating about a rotor axis (121) extending in a transverse direction (81) in a rotor direction of rotation (122), and having a number of blades (13) which are arranged at equal distances from one another along a channel wall (115) delimiting the rotor holder (11) and project with respect to this channel wall so that, during operation of the cutting and/or pressing device (1), the tines (14) each pass through a gap (130) between two adjacent blades (13), the channel wall (115) comprising a channel passage (114) which is arranged downstream of the blades (13) in a crop flow direction (G), a separating wall (111) being arranged at opposite ends (151, 152) of the channel passage (114) in the transverse direction (81) and delimiting the channel passage (114),
**characterized in that**
in the transverse direction (81), the outer blades (131, 132) each form at least one part of an edge contour (110) of one of the separating walls (111).

2. Cutting and/or pressing device (1) according to claim 1,
**characterized in that** the separating walls (111) are each designed as an outer blade (131, 132), or **in that** the outer blades (131, 132) each abut one of the separating walls (111), or **in that** the outer blades (131, 132) are integrated into one of the separating walls (111).

3. Cutting and/or pressing device (1) according to either of the preceding claims, **characterized in that** the separating walls (111) each project into the cutting and/or pressing rotor (12) as far as an outer circumferential surface (123) of this cutting and/or pressing rotor.

4. Cutting and/or pressing device (1) according to any of the preceding claims, **characterized in that** a part of the contour (110) of the separating walls (111) is formed in each case concentrically to the rotor axis (121).

5. Cutting and/or pressing device (1z) according to any of the preceding claims, **characterized in that** the separating walls (111) are each arranged between two tines (141, 14) which are adjacent in the transverse direction (81).

6. Cutting and/or pressing device (1) according to any of the preceding claims, **characterized in that** at least one outer tine (141) is arranged in each case on a side (119) of the separating walls (111) facing away from the channel passage (114) and is provided for taking away uncut harvested crop.

7. Cutting and/or pressing device (1) according to any of the preceding claims, **characterized in that** it comprises a cutting and/or pressing region (112) which extends from one separating wall (111) to the opposite separating wall (111) and in which the blades (13) are arranged, and **in that** it comprises an edge and/or conveying region (113) on the side of the separating walls (111) facing away from the channel passage (114), in which region the at least one outer tine (141) is arranged in each case.

8. Cutting and/or pressing device (1) according to any of the preceding claims, **characterized in that** a transverse conveying means is arranged on the cutting and/or pressing rotor in the edge and/or conveying region.

9. Agricultural harvesting machine having a cutting and/or pressing device (1) according to any of the preceding claims.

## Revendications

1. Dispositif de coupe et/ou de presse (1) de machine récolteuse agricole notamment chariot de chargement (10) ou presse à balles comprenant :
- un rotor de coupe et/ou de presse (12) et un support de rotor (11) pour le rotor de coupe et/ou de presse (12),
* le rotor de coupe et/ou de presse (12) a de multiples dents (14) pour transférer le produit récolté et qui, en fonctionnement du dispositif de coupe et/ou de presse (1), tourne autour d'un axe de rotor (121) orienté dans la direction transversale (81) dans un sens de rotation de rotor (122), et
- des couteaux (13) qui sont régulièrement écartés les uns des autres le long d'une paroi de canal (115) délimitant le support de rotor (11) par rapport à celle-ci de façon que les dents (14) en fonctionnement du dispositif de coupe et/ou de presse (1) passent dans l'intervalle (130) respectif entre deux couteaux voisins (13),
* la paroi de canal (115) a un passage de canal (114) en aval des couteaux (13) dans la direction du flux de produit (G),
* les extrémités (151, 152) du passage de canal (114), opposées dans la direction transversale (81), comportent respectivement une cloison (111) qui délimite le passage de canal (114),
dispositif **caractérisé en ce que**
les couteaux (131, 132) extérieurs dans la direction transversale (81) forment au moins respectivement une partie du contour de bord (110) de l'une des cloisons (111).

2. Dispositif de coupe et/ou de presse (1) selon la revendication 1, **caractérisé en ce que**
- les cloisons (111) sont réalisées chacune comme couteau extérieur (131, 132), ou
- les couteaux extérieurs (131, 132) s'appliquent respectivement contre l'une des cloisons (111), ou
- les couteaux extérieurs (131, 132) sont intégrés dans l'une des cloisons (111).

3. Dispositif de coupe et/ou de presse (1) selon l'une des revendications précédentes,
**caractérisé en ce que**
les cloisons (111) pénètrent respectivement jusqu'à une surface périphérique extérieure (123) du rotor de coupe et/ou de presse (12) dans celui-ci.

4. Dispositif de coupe et/ou de presse (1) selon l'une des revendications précédentes,
**caractérisé en ce que**
une partie du contour (110) des cloisons (111) est respectivement concentrique à l'axe de rotation (121).

5. Dispositif de coupe et/ou de presse (1) selon l'une des revendications précédentes,
**caractérisé en ce que**
les cloisons (111) sont respectivement entre deux dents (141, 14) voisines dans la direction transversale (81).

6. Dispositif de coupe et/ou de presse (1) selon l'une des revendications précédentes,
**caractérisé en ce que**
l'un des côtés (119) des cloisons (111) à l'opposé du passage de canal (114) a au moins une dent extérieure (141) respective pour entraîner les produits de récolte non coupés.

7. Dispositif de coupe et/ou de presse (1) selon l'une des revendications précédentes,
**caractérisé en ce qu'**il comporte
une zone de coupe et/ou de presse (112) qui s'étend à partir d'une cloison (111) vers la cloison opposée (111) et dans laquelle se trouvent les couteaux (13) et qui ont sur le côté des cloisons (111) opposé au passage de canal (114) une zone de bord et/ou de transfert (113) respective avec, au moins une dent extérieure (141).

8. Dispositif de coupe et/ou de presse (1) selon l'une des revendications précédentes,
**caractérisé par**
un moyen de transfert transversal sur le rotor de coupe et/ou de presse respectivement dans la zone du bord et/ou dans la zone de transfert.

9. Machine de récolte, agricole comportant un dispositif de coupe et/ou de presse (1) selon l'une des revendications précédentes.
